# EUROPÄISCHE PATENTSCHRIFT

(11) **EP 2 477 711 B1**
(45) Veröffentlichungstag und Bekanntmachung des Hinweises auf die Patenterteilung: **08.10.2014**
(21) Anmeldenummer: 10751600.7
(22) Anmeldetag: 27.08.2010
(51) Int. Cl.: B01D 35/153, B01D 35/16, B01D 36/00, F02M 37/22

(54) **FILTEREINRICHTUNG**
FILTER DEVICE
DISPOSITIF FILTRANT

(30) Priorität: 15.09.2009 DE 102009041523
(43) Veröffentlichungstag der Anmeldung: 25.07.2012
(73) Patentinhaber: Mahle International GmbH, 70376 Stuttgart (DE)
(72) Erfinder: BRAUNHEIM, Michael, 73035 Göppingen (DE); LIKA, Torsten, 70197 Stuttgart (DE)
(74) Vertreter: BRP Renaud & Partner
(86) Internationale Anmeldenummer: PCT/EP2010/062585
(87) Internationale Veröffentlichungsnummer: WO 2011/032818

(56) Entgegenhaltungen:
- EP-A1- 1 695 753
- EP-A2- 0 260 069
- EP-A2- 0 385 113
- DE-A1- 19 951 085
- DE-A1-102005 015 194
- DE-A1-102007 009 352
- DE-U1-202006 006 084
- JP-A- 7 217 577
- US-A- 3 502 218
- US-A- 5 089 129
- US-A- 5 548 893
- US-A1- 2008 245 719
- US-A1- 2009 008 321
- US-B1- 6 409 804

## Beschreibung

Die vorliegende Erfindung eine Filtereinrichtung mit einem in einem Filtergehäuse stehend angeordneten Ringfilterelement, welches eine obere und eine untere Endscheibe aufweist, gemäß dem Oberbegriff des Anspruchs 1. Die Erfindung betrifft außerdem ein Ringfilterelement für eine derartige Filtereinrichtung.

Eine gattungsgemäße Filtereinrichtung ist hinlänglich bekannt und in nahezu sämtlichen modernen Kraftfahrzeug zu finden, eingesetzt beispielsweise als Öl-oder Kraftstofffilter.

Beispiele hier zu sind in den Dokumenten EP0260069A2, DE 10 2005 015 194 A1, EP 0385113 A2, EP 2135 661 A2 und US 35 022 18 A1 offenbart.

Um eine einwandfreie Filterwirkung gewährleisten zu können, ist es für die Hersteller von derartigen Filtereinrichtungen oftmals wichtig, dass nur von ihnen selbst autorisierte oder hergestellte Filterelemente eingesetzt werden. Beim Einsatz von Filterelementen fremder Fabrikate oder Imitate können nämlich nicht nur die Filterleistung beeinträchtigt, sondern zugleich auch Schäden verursacht werden. Auf der anderen Seite ist es wünschenswert, Filterelemente für derartige Filtereinrichtungen möglichst kostengünstig herzustellen und anbieten zu können.

Die vorliegende Erfindung beschäftigt sich daher mit dem Problem, für eine Filtereinrichtung der gattungsgemäßen Art, eine verbesserte oder zumindest eine alternative Ausführungsform anzugeben, welche insbesondere ausschließlich den Einsatz von autorisierten Filterelementen ermöglicht.

Dieses Problem wird erfindungsgemäß durch die Gegenstände der unabhängigen Ansprüche gelöst. Vorteilhafte Ausführungsformen sind Gegenstand der abhängigen Ansprüche.

Die vorliegende Erfindung beruht auf dem allgemeinen Gedanken, ein an sich bekanntes Ringfilterelement, welches stehend in einem Filtergehäuse einer Filtereinrichtung angeordnet ist, bodenseitig mit einem Schmutztopf zu versehen, an welchem ein abstehender, stutzenförmiger Pin ausgebildet ist, mit welchem das Ringfilterelement in einen an einem Funktionselement vorgesehenen Kanal eingreift, sofern das Ringfilterelement korrekt montiert ist. Der Schmutztopf ist dabei an der unteren Endscheibe des Ringfilterelementes angeordnet, wobei der stutzenförmige Pin einteilig mit dem Schmutztopf ausgebildet ist und ein Betrieb der Filtereinrichtung ausschließlich dann ermöglicht wird, sofern der Pin des Schmutztopfes in den funktionselementseitigen Kanal eingreift. Der Schmutztopf weist eine bodenseitige Öffnung auf, die ein Stutzen des Funktionselement durchdringt. Im Stutzen des Funktionselements sind Ablauföffnungen für gesammelten Schmutz bzw. für gesammeltes Wasser vorgesehen. Der Schmutztopf und damit auch der stutzenförmige Pin sind dabei vorzugsweise einstückig oder einteilig mit einer unteren Endscheibe des Ringfilterelementes ausgebildet, insbesondere ist der Schmutztopf an die untere Endscheibe des Ringfilterelementes angeschweißt, beispielsweise mittels Reibschweißen, Ultraschallschweißen oder Laserschweißen. Innerhalb des Schmutztopfes ist darüber hinaus ein Wasserabscheider vorgesehen, so dass der Schmutztopf an sich sowohl als Schmutzsammeiraum als auch als Wassersammelraum genutzt werden kann und bodenseitig zumindest einen Ablauf für gesammelten Schmutz bzw. für gesammeltes Wasser aufweist. Mit der erfindungsgemäßen Filtereinrichtung ist es somit möglich, dass diese nur verwendet werden kann, sofern dazu passende Ringfilterelemente mit dem schmutztopfseitigen Pin verwendet werden, der Einsatz anderer Ringfilterelemente, mit welchen unter Umständen die Filterleistung der Filtereinrichtung beeinträchtigt werden könnte, kann somit zuverlässig verhindert werden.

Bei einer vorteilhaften Weiterbildung der erfindungsgemäßen Lösung, ist der innerhalb des Schmutztopfes angeordnete Wasserabscheider als Coaleszer ausgebildet und gleichzeitig an die untere Endscheibe des Ringfilterelementes angeschweißt. Ein derartiger Coaleszer ist in der Lage, Wasserpartikel zu sammeln und abzuleiten und damit beispielsweise im Kraftstoff vorhandene Wasseranteile herauszufiltern, so dass diese nicht in den Verbrennungsmotor gelangen und dort Korrosionsschäden verursachen können. Die Filtereinrichtung kann in diesem Fall beispielsweise als Öl- oder Kraftstofffilter ausgebildet sein, wobei ganz generell auch eine Ausbildung als Luftfilter denkbar ist. Der Wasserabscheider ist dabei an die untere Endscheibe des Ringfilterelementes angebunden, insbesondere angeschweißt, und kann dadurch vor der Montage bzw. vor dem Schließen des Schmutztopfes exakt positioniert und fixiert werden, was den Herstellungsprozess der erfindungsgemäßen Filtereinrichtung deutlich vereinfacht.

Bei einer weiteren vorteilhaften Ausführungsform der erfindungsgemäßen Lösung ist am Filtergehäusetopf oder an einem darin angeordneten Funktionselement eine Führung vorgesehen, entlang welcher der Pin des Schmutztopfes bei der Montage des Ringfilterelementes zum Kanal geführt wird. Eine derartige Führung kann beispielsweise in der Art einer Rampe ausgebildet sein, welche ein beliebiges Einsetzen des Ringfilterelementes ermöglicht, so dass dieses mittels des Pins entlang der Führung in den Kanal gleitet und dadurch eine stets richtige Montage gewährleistet werden kann. Eine derartige Führung kann zum einen kostengünstig, beispielsweise durch ein geeignetes Spritzgusswerkzeug, realisiert werden und gewährleistet zum anderen ein deutlich vereinfachtes Handling der erfindungsgemäßen Filtereinrichtung, da das Ringfilterelement in einer beliebigen Drehwinkellage in den Filtergehäusetopf eingesetzt werden und durch ein einfaches Verdrehen in seine richtige und korrekte Stellung überführt werden kann. Eine Fehlmontage des Ringfilterelementes kann dadurch zuverlässig ausgeschlossen werden.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Dabei zeigen, jeweils schematisch,
- Fig. 1: einen erfindungsgemäßes Ringfilterelement in einer Seitenansicht,
- Fig. 2: eine Ansicht auf ein Funktionselement,
- Fig. 3: ein Zusammenwirken des Ringfilterelementes mit dem Funktionselement,
- Fig. 4: eine Darstellung wie in Fig. 3, jedoch bei einer anderen Drehwinkelstellung des Ringfilterelementes,
- Fig. 5: eine Detaildarstellung eines stutzenförmig abstehenden Pins des Ringfilterelementes vor dem Eintauchen in einen zugehörigen Kanal,
- Fig. 6: eine Darstellung wie in Fig. 5, jedoch nach dem Eintauchen des Pins in den Kanal.

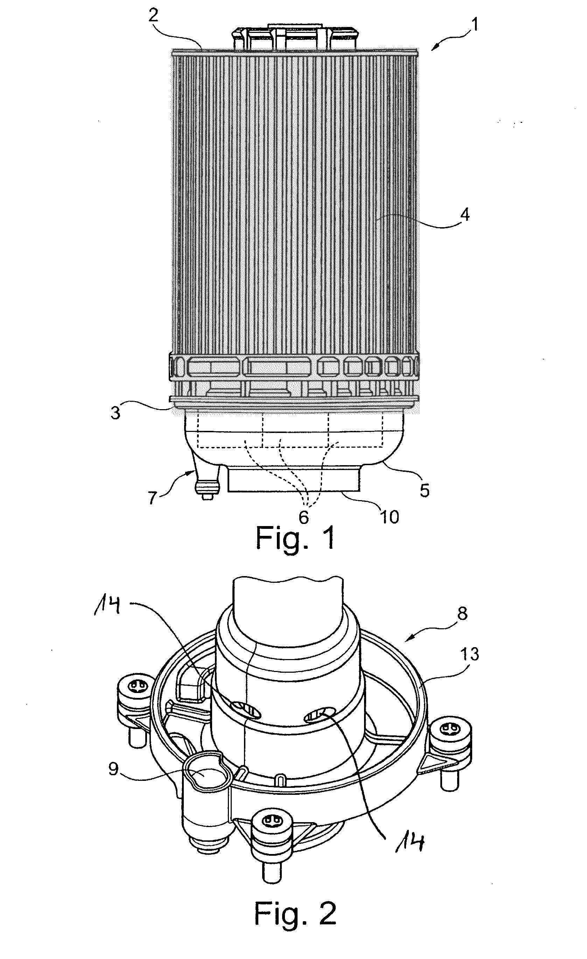

Entsprechend der Fig. 1, weist ein erfindungsgemäßes Ringfilterelement 1 eine obere Endscheibe 2 sowie eine untere Endscheibe 3 auf. Zwischen den beiden Endscheiben 2 und 3 ist dabei ein Filtermaterial 4, beispielsweise in der Art eines Faltensterns, angeordnet. Das Ringfilterelement 1 ist dabei ähnlich der gezeigten Darstellung in Fig. 1 stehend in einem nicht gezeigten Filtergehäuse einer Filtereinrichtung, beispielsweise eines Öl- oder Kraftstofffilters, angeordnet. Erfindungsgemäß ist nun an der unteren Endscheibe 3 ein Schmutztopf 5 mit einem darin angeordneten und lediglich mit unterbrochen gezeichneter Linie skizziertem Wasserabscheider 6 vorgesehen. Nach unten abstehend ist an dem Schmutztopf 5 ein stutzenförmiger Pin 7 vorgesehen, welcher komplementär zu einem am nicht gezeigten Filtergehäusetopf oder an einem in diesen nicht gezeigten Filtergehäusetopf einsetzbaren Funktionselement 8 (vgl. Fig. 2) ausgebildeten Kanal 9 ausgebildet ist. Ein Betrieb der kompletten Filtereinrichtung ist dabei ausschließlich dann möglich, sofern der Pin 7 in den Kanal 9, der insbesondere als Leerlaufkanal ausgebildet sein kann, eingreift.

Generell kann der Wasserabscheider 6 als sogenannter Coaleszer ausgebildet und an die untere Endscheibe 3 des Ringfilterelementes 1 angeschweißt sein. Das Anschweißen kann beispielsweise mittels Ultraschallschweißen, Reibschweißen oder Laserschweißen erfolgen und gewährleistet ein zuverlässiges Positionieren und Fixieren des Wasserabscheiders 6 an der unteren Endscheibe 3 des Ringfilterelementes 1, so dass in einem anschließenden Arbeitsschritt der Schmutztopf 5 mit der Endscheibe 3 verbunden, insbesondere verschweißt werden kann. Denkbar ist selbstverständlich auch ein Anschweißen des Wasserabscheiders 6 an der unteren Endscheibe 3 nach dem Anschweißen des Schmutztopfes 5 an der unteren Endscheibe 3, wobei in diesem Fall der Wasserabscheider 6 durch eine bodenseitige Öffnung 10 des Schmutztopfes 5 nachträglich eingeführt werden muss.

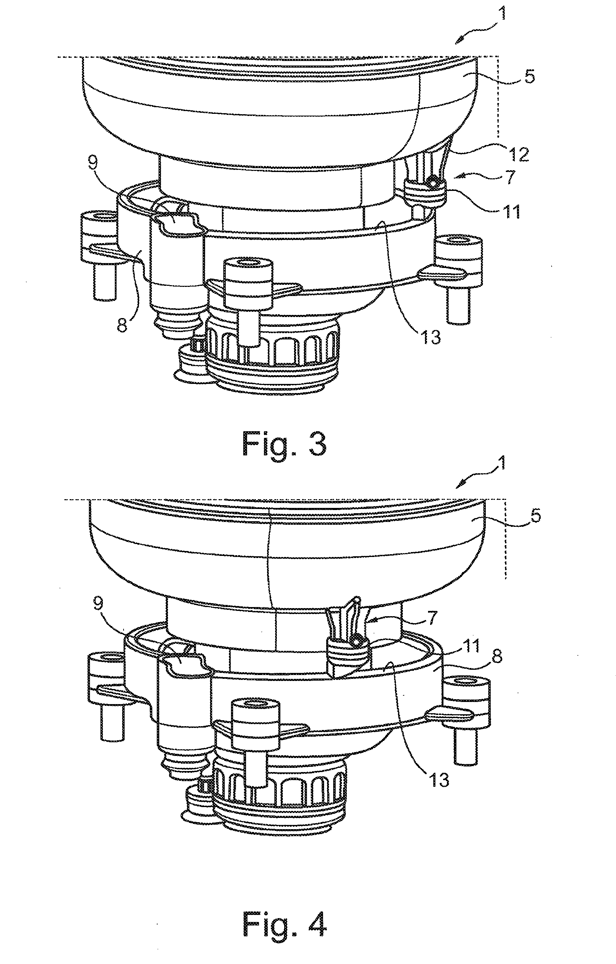

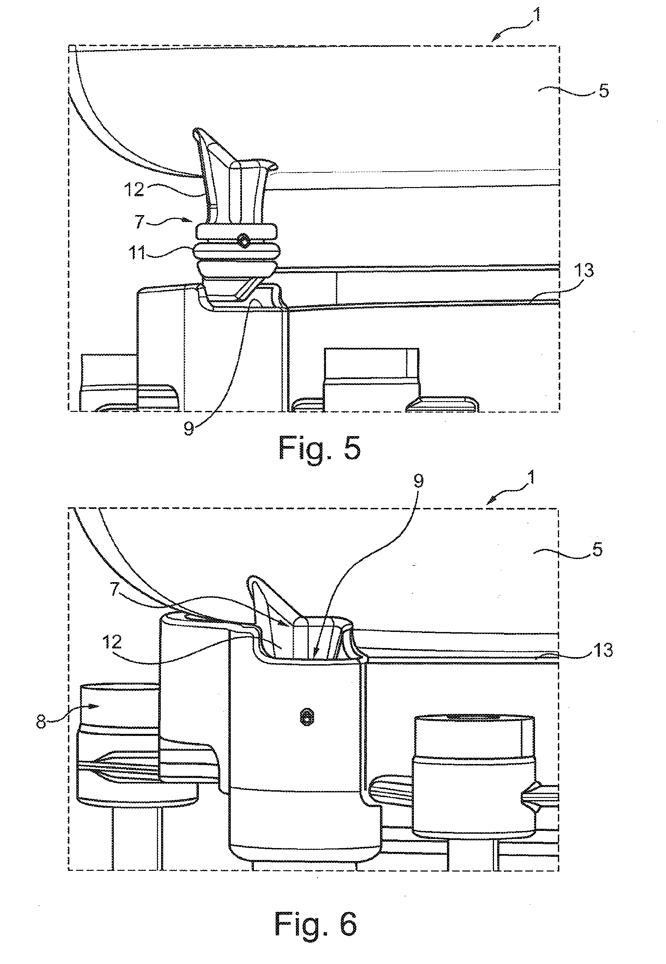

Betrachtet man die Fig. 1 und 3 bis 5, so kann man erkennen, dass an dem Pin 7, das heißt insbesondere an dessen Pinkopf, zumindest ein Dichtelement 11 angeordnet ist, das den Kanal 9 bei darin eingreifenden Pin 7 dicht verschließt. Das zumindest eine Dichtelement 11 kann dabei beispielsweise als gewöhnlich O-Ring-Dichtung ausgebildet sein. Betrachtet man die Fig. 5, so kann man erkennen, dass der Pin 7 einen im Querschnitt kreuzförmigen Stiel 12 und den vorab erwähnten, sich daran anschließenden Pinkopf aufweist, wobei das Querschnittsprofils des Stils 12 dem Pin 7 eine hohe Steifigkeit verleiht. Zum korrekten Einführen des Pins 7 in dem Kanal 9, kann am Filtergehäusetopf oder aber an dem Funktionselement 8 eine Führung 13 vorgesehen sein, mit welcher bestenfalls der Pin 7 reibungsarm zum Kanal 9 entlang gleitet. Die Führung 13 kann dabei beispielsweise rampenartig ausgebildet sein.

Die Erfindung betrifft dabei nicht nur eine komplette Filtereinrichtung, bestehend aus Filtergehäuse und Filtergehäusetopf sowie darin angeordnetem Funktionselement 8 und Ringfilterelement 1, sondern auch das Ringfilterelement 1 als separates Bauelement; insbesondere für den Ersatzteilmarkt. Durch die einteilige Ausbildung des Ringfilterelementes 1 zusammen mit dem Schmutztopf 5 und insbesondere durch die einteilige Ausbildung des Pins 7 und des Schmutztopfes 5, kann somit ein Komplettteil, insbesondere auch für den Ersatzmarkt, geschaffen werden, welches einerseits kostengünstig ist und welches andererseits gewährleistet, dass keine ungeeigneten und nicht autorisierten Fabrikate Verwendung finden, welche die Filterleistung schwächen und dadurch unter Umständen Schäden erzeugen können. Selbstverständlich kann dabei sowohl das Pinelement 7 als auch der Schmutztopf 5 aus kostengünstigem Kunststoff, insbesondere als Kunststoffspritzgussteil, ausgebildet sein. Bei den Darstellungen ist der Kanal 9 als Leerlaufkanal ausgebildet.

## Patentansprüche

1. Filtereinrichtung mit einem in einem Filtergehäuse stehend angeordneten Ringfilterelement (1), das eine obere Endscheibe (2) und eine untere Endscheibe (3) aufweist,
**dadurch gekennzeichnet, dass**
- an der unteren Endscheibe (3) ein Schmutztopf (5) mit einem darin angeordneten Wasserabscheider (6) vorgesehen ist,
- der Schmutztopf (5) einen abstehenden, stutzenförmigen Pin (7) aufweist,
- an einem in den Filtergehäusetopf der Filtereinrichtung einsetzbaren Funktionselement (8) ein komplementär zu dem Pin (7) ausgebildeter Kanal (9) vorgesehen ist, wobei ein Betrieb der Filtereinrichtung ausschließlich dann möglich ist, sofern der Pin (7) in den Kanal (9) eingreift,
- der Schmutztopf (5) eine bodenseitige Öffnung (10) aufweist,
- das Funktionselement (8) einen Stutzen aufweist, der die Öffnung (10) durchdringt,
- im Stutzen des Funktionselements (8) Ablauföffnungen (14) für gesammelten Schmutz bzw. für gesammeltes Wasser vorgesehen sind.

2. Filtereinrichtung nach Anspruch 1,
**dadurch gekennzeichnet,**
**dass** der Wasserabscheider (6) als Coaleszer ausgebildet und an die untere Endscheibe (3) des Ringfilterelements (1) angeschweißt ist.

3. Filtereinrichtung nach Anspruch 2,
**dadurch gekennzeichnet,**
**dass** der Schmutztopf (5) und an die untere Endscheibe (3) des Ringfilterelements (1) angeschweißt ist.

4. Filtereinrichtung nach einem der Ansprüche 1 bis 3,
**dadurch gekennzeichnet,**
**dass** die Filtereinrichtung als Öl- oder als Kraftstofffilter ausgebildet ist.

5. Filtereinrichtung nach einem der Ansprüche 1 bis 4,
**dadurch gekennzeichnet,**
**dass** an dem Pin (7) zumindest ein Dichtelement (11) angeordnet ist, das den Kanal (9) bei darin eingreifendem Pin (7) dicht verschließt.

6. Filtereinrichtung nach einem der Ansprüche 1 bis 5,
**dadurch gekennzeichnet,**
**dass** am Filtergehäusetopf oder an dem Funktionselement (8) eine Führung (13) vorgesehen ist, welche den Pin (7) zum Kanal (9) führt.

7. Filtereinrichtung nach Anspruch 5 oder 6,
**dadurch gekennzeichnet,**
**dass** der Pin (7) einen im Querschnitt kreuzförmigen Stiel (12) und einen sich daran anschließenden Pinkopf aufweist, wobei das wenigstens eine Dichtelement (11) im Bereich des Pinkopfes angeordnet ist.

8. Ringfilterelement (1) für eine Filtereinrichtung nach einem der Ansprüche 1 bis 7,
**dadurch gekennzeichnet, dass**
- an der unteren Endscheibe (3) ein Schmutztopf (5) mit einem darin angeordneten Wasserabscheider (6) vorgesehen ist,
- der Schmutztopf (5) einen abstehenden, stutzenförmigen Pin (7) aufweist.

## Claims

1. A filter device having a ring filter element (1) arranged in a filter housing in an upright manner, which ring filter element has an upper end disc (2) and a lower end disc (3),
**characterized in that**
- a dirt pot (5) having a water separator (6) arranged therein is provided on the lower end disc (3),
- the dirt pot (5) has a protruding, nozzle-shaped pin (7),
- a channel (9) designed to be complementary to the pin (7) is provided on a functional element (8) that can be inserted into the filter housing pot of the filter device, wherein operation of the filter device is only possible when the pin (7) engages into the channel (9),
- the dirt pot (5) has an opening (10) on the base side,
- the function element (8) has a nozzle, which percolates the opening (10),
- in the nozzle of the function element (8) discharge openings (14) for collected dirt respectively collected water are provided.

2. The filter device according to Claim 1,
**characterized in that**
the water separator (6) is constructed as a coalescer and is welded onto the lower end disc (3) of the ring filter element (1).

3. The filter device according to Claim 2,
**characterized in that**
the dirt pot (5) is welded onto the lower end disc (3) of the ring filter element (1).

4. The filter device according to one of Claims 1 to 3,
**characterized in that**
the filter device is constructed as an oil- or fuel filter.

5. The filter device according to one of Claims 1 to 4,
**characterized in that**
on the pin (7) at least one sealing element (11) is arranged, which tightly closes the channel (9) with the pin (7) engaging therein.

6. The filter device according to one of Claims 1 to 5,
**characterized in that**
on the filter housing pot or on the functional element (8) a guide (13) is provided, which guides the pin (7) to the channel (9).

7. The filter device according to Claim 5 or 6,
**characterized in that**
the pin (7) has a shaft (12) which is cruciform in cross-section, and has a pin head adjoining thereto, wherein the at least one sealing element (11) is arranged in the region of the pin head.

8. A ring filter element (1) for a filter device according to one of Claims 1 to 7,
**characterized in that**
- on the lower end disc (3) a dirt pot (5) is provided, having a water separator (6) arranged therein,
- the dirt pot (5) has a protruding, nozzle-shaped pin (7).

## Revendications

1. Dispositif de filtrage comportant un élément de filtre annulaire (1) disposé verticalement dans un logement de filtre, qui présente une rondelle d'extrémité supérieure (2) et une rondelle d'extrémité inférieure (3), **caractérisé en ce que**
- sur la rondelle d'extrémité inférieure (3) un pot d'impuretés (5) avec un séparateur d'eau (6) disposé dans celui-ci est prévu,
- le pot d'extrémité (5) présente une goupille (7) en forme d'embout, faisant saillie,
- sur un élément fonctionnel (8) insérable dans le pot de logement de filtre du dispositif de filtrage un canal (9) réalisé complémentairement à la goupille (7) est prévu, moyennant quoi un fonctionnement du dispositif de filtrage est ensuite exclusivement possible dans la mesure où la goupille (7) vient en prise dans le canal (9),
- le pot d'impuretés (5) présente une ouverture (10) du côté du fond,
- l'élément fonctionnel (8) présente un embout, qui traverse l'ouverture (10),
- dans l'embout de l'élément fonctionnel (8) des ouvertures d'évacuation (14) pour les impuretés accumulées, respectivement pour l'eau accumulée sont prévues.

2. Dispositif de filtrage selon la revendication 1, **caractérisé en ce que** le séparateur d'eau (6) est conçu comme un coalesceur et est soudé sur la rondelle d'extrémité inférieure (3) de l'élément de filtre annulaire (1).

3. Dispositif de filtrage selon la revendication 2, **caractérisé en ce que** le pot d'impuretés (5) est soudé sur la rondelle d'extrémité inférieure (3) de l'élément de filtre annulaire (1).

4. Dispositif de filtrage selon une des revendications 1 à 3, **caractérisé en ce que** le dispositif de filtrage est conçu comme un filtre à huile ou à carburant.

5. Dispositif de filtrage selon une des revendications 1 à 4, **caractérisé en ce que** sur la goupille (7) au moins un élément d'étanchéité (11) est disposé, qui obture de manière étanche le canal (9) quand la goupille (7) s'engage dans celui-ci.

6. Dispositif de filtrage selon une des revendications 1 à 5, **caractérisé en ce que** sur le pot de logement de filtre ou sur l'élément fonctionnel (8) une glissière (13) est prévue, qui guide la goupille (7) vers le canal (9).

7. Dispositif de filtrage selon la revendication 5 ou 6, **caractérisé en ce que** la goupille (7) présente une tige (12) à section transversale cruciforme et une tête de goupille qui s'y rattache, dans lequel au moins un élément d'étanchéité (11) est disposé au niveau de la tête de goupille.

8. Elément de filtre annulaire (1) pour un dispositif de filtrage selon une des revendications 1 à 7, **caractérisé en ce que**
- sur la rondelle d'extrémité inférieure (3) un pot d'impuretés (5) avec un séparateur d'eau (6) disposé dans celui-ci est prévu,
- le pot d'extrémité (5) présente une goupille (7) en forme d'embout, faisant saillie.
